# EUROPEAN PATENT SPECIFICATION

(11) **EP 1 321 006 B1**
(45) Date of publication and mention of the grant of the patent: **29.11.2006**
(21) Application number: 01973569.5
(22) Date of filing: 27.09.2001
(51) Int. Cl.: H04Q 7/32

(54) **COMMUNICATION SYSTEM FOR MOBILE PLATFORMS**
ÜBERTRAGUNGSSYSTEM FÜR MOBILE PLATFORM
SYSTEME DE COMMUNICATION POUR PLATES-FORMES MOBILES

(30) Priority: 27.09.2000 US 235796 P; 27.09.2000 US 235585 P
(43) Date of publication of application: 25.06.2003
(73) Proprietor: Aerosat Corporation, Temple, NH 03084 (US)
(72) Inventor: BARRETT, Michael, J., Temple, NH 03084 (US); ANDERSON, Richard, B., Aurora, OH 44202 (US); CLYMER, Richard, Concord, NH 03301 (US); SABAT, John, Merrimack, NH 03054 (US)
(74) Representative: HOFFMANN EITLE
(86) International application number: PCT/US2001/030195
(87) International publication number: WO 2002/028134

(56) References cited:
- EP-A- 1 017 188
- EP-A- 1 058 409
- DE-A- 19 748 681
- US-A- 5 530 909
- US-A- 5 973 647
- US-B1- 6 285 878

## Description

### Field of the Invention

The present invention relates to a communications methodology and system for providing communication signals of interest to movable platforms, for possible use by passengers associated with the destinations, which are located in areas where the signal would not otherwise be available.

### Description of the Related Art

Studies have showed that vehicle usage on major roadways in the US is now very high resulting in common time delays for passengers. The study also showed that this problem of traffic congestion is no longer confined to large cities, but is becoming a significant concern in small and medium-sized cities. Numerous commuters waste a significant amount of time each day as a result of traffic delays they experience while travelling to and from work.

Various methods of communicating to passengers within vehicles are currently in use. Many of these are mobile cellular networks that provide communication services for a predetermined geographical area. This area is usually large and is usually divided into numerous smaller geographical areas called "cells". A base station is usually located in each cell and provides a signal to each subscriber within that cell. Each base station is connected to adjacent base stations and is typically controlled by a base station controller. The base station controller provides the signal processing and communication processing required to operate the network of base stations throughout a predetermined geographical area.

Current ground and air mobile cellular communications systems are often based on the topography of the terrain. They are often optimized to send and receive many simultaneous communication signals to and from fixed phone subscribers located, for example, in homes or offices, as well as to and from mobile subscribers. These systems are not based specifically on the existing complex pathway infrastructure where many of the mobile subscribers are located. Often the cellular base stations and transmitters are centrally placed, for example on the highest local hill or on top of a tall building, to access both stationary and mobile users by maximizing the radiation pattern of the system cell area. However, the terrain often obscures the cellular base station's line of sight communication to the mobile users. For example, the terrain may include hills and/or valleys as well as manmade structures that may block the signal, or scatter the signal causing fading and thus reducing the signal strength or eliminating the signal altogether.

Thus, current mobile cellular networks may suffer from interference along the signal path, fading and multipath effects. Fading is caused by the signal being reflected from many different features of the terrain, buildings and other physical features of the topography. These reflections result in a vehicle receiving a signal from different directions concurrently. The signals concurrently received by the mobile user often arrive with different transmission delays producing out of phase signals which may destructively interfere with one another, causing poor quality reception. When a movable platform is travelling along a pathway and the cellular base stations and transmitters are located at a central place, frequent signal fading can result Increasing the transmitter power can help to overcome fading, however, such an increase in power also may have adverse effects, such as, increased power consumption and therefore reduced battery life for battery powered phones, and may cause increased interference within the cellular communication system. In addition, the increased transmitter power may place the mobile subscriber at higher personal risk as a result of the effects of the radiation.

Other forms of communication systems, for example, satellite communication networks and systems, are also not primarily optimized for passengers in movable platforms positioned along pathways.

Another issue with existing communication networks is the usefulness of the information transmitted to the mobile users. For example, radio stations may broadcast traffic reports identifying prevailing traffic conditions and advising passengers in vehicles of specific congestion points and accidents. The broadcasts sometimes recommend alternate routes, but do not, in general, provide individual communications with re-routing advice to passengers in vehicles, as the broadcasts do not know the precise destinations of the vehicles. In addition, the broadcasts are often based on the time of day and not based on when a traffic event occurs. For example, a conventional traffic report may be broadcast every 10, 15 or even 30 minutes. Some broadcasts are only transmitted during regular commuting hours. A passenger in a mobile vehicle may therefore miss an opportunity to re-route its travel because of untimely broadcasts. For example, a passenger in a mobile vehicle may have the option of using an alternate roadway, but may not receive the traffic advisory until after passing the particular alternate roadway. Cellular phones may offer a calling option to obtain traffic congestion information, however, specific responses to individual automobiles and their location, are not always available.

A relaying system that relays an information signal between vehicles in order to transmit the signal from a source to a destination that is not within direct range of the source is described in U.S. Patent No. 5,530,909 to Simon et al. The '909 patent discloses equipping aerodynes (e.g., aircraft) with open HF or VHF transmission relays that permanently exchange information with relays momentarily within their range in order to pass the information from relay to relay from an emitting station to a destination. According to the '909 patent, the relays each implement a route selection algorithm to determine a best route for each message. The '909 patent thus discloses a one-way (simplex) relaying method and system of communication using HF or VHF frequency band and low data rate, burst transmission. The '909 patent does not discuss transmitting the information signal between vehicles so that the vehicles can receive and utilize the information signal, but rather simply describes using the vehicles as relays to transmit the signal from the source to the destination.

Another system and method for providing data to a remote location is described in European Patent Application No. EP 1 017 188 A2. The '188 application discloses a system that relies on interconnections between aircraft along an established corridor for interconnecting a passenger with a ground station with data network access. According to the '188 application, aircraft traveling along a particular air traffic route form a data network chain for receiving and forwarding messages among ground stations and other aircraft moving along the air traffic route, with each aircraft being in constant contact with the aircraft preceding it and following it, and with the first and last aircrafts in the chain being "anchored" to the ground stations. In this manner, the aircraft act as relay points to allow aircraft too far away to directly receive data from the ground stations to receive the data via other aircraft in the chain.

Another communication system and method for transmitting signals between moving bodies is disclosed in European Patent Application No. 1 482 661 A2, which describes a process for transmitting information between vehicles, each vehicle being equipped with a communication device for receiving and sending radio messages. In order to be able to transmit information very rapidly to a large number of vehicles, the '661 application discloses that a radio message is generated, which contains the information and limit parameters, which signalize an end of the information transmission, at least one of the vehicles receives the radio message and sends it to every other moving body that comes within range of the radio message, and for the cascade-like dissemination of the information, every other vehicle that has received the radio message, sends it to every other moving body that comes within range of the radio message.

An object of the invention is to provide information to at least one movable platform that is not within a signal coverage area of an information source.

According to the invention, there is provided a vehicular communication network for providing information to and from passenger vehicles, the vehicular communication network comprising: a plurality of passenger vehicles, including at least first, second and third passenger vehicles, located on vehicular pathways and being adapted to transmit and receive signals to and from one another; a first transmitter/receiver unit located on the first passenger vehicle, the first transmitter/receiver unit being adapted to transmit an information signal containing the information; a second transmitter/receiver unit located on the second passenger vehicle, the second transmitter/receiver unit being adapted to receive the information signal from the first transmitter/receiver unit and to re-transmit at least a portion of the information signal; and a third transmitter/receiver unit located on the third passenger vehicle, the third transmitter/receiver unit being adapted to receive at least the portion of the information signal from the second transmitter/receiver unit; wherein the information signal includes a first portion of information intended for the second passenger vehicle and a second portion of information; and wherein the information signal re-transmitted by the second transmitter/receiver unit does not include the first portion of information.

The foregoing and other objects, features and advantages of the invention will be apparent from the following description and from the accompanying drawings, in which like reference characters refer to the same parts through the different figures, and in which:
Fig. 1 illustrates an exemplary portion of the communication methodology and system of the invention;
Fig. 2 illustrates examples of signal routing that can be accomplished with the method and system of the invention, for movable platforms on parallel pathways with the same primary direction of travel;
Fig. 3 illustrates examples of signal routing that can be accomplished with the method and system of the invention, for movable platforms on parallel pathways having the same and/or opposite primary directions of travel;
Fig. 4 is a functional diagram illustrating an example of the method and system of the invention implemented with movable platforms on perpendicular pathways;
Fig. 5 illustrates examples of signal routing that can be accomplished with the method and system of the invention, for movable platforms on parallel and/or perpendicular pathways;
Fig. 6 illustrates additional examples of signal routing that can be accomplished with the method and system of the invention, for movable platforms on parallel and/or perpendicular pathways;
Fig. 7 illustrates examples of signal routing that can be accomplished with the method and system of the invention, for movable platforms on parallel and/or skewed pathways;
Fig. 8 illustrates additional examples of signal routing that can be accomplished with the method and system of the invention, for movable platforms on parallel and/or skewed pathways;
Fig. 9 illustrates an example of the method and system of the invention implemented with vehicles that may not be located on pathways;
Fig. 10 illustrates another example of the method and system of the invention implemented with vehicles that may not be located on pathways;
Fig. 11 illustrates an example of the method and system of the invention implemented with passenger aircraft; and
Fig. 12 illustrates a functional diagram of an embodiment of the method and system of the invention, that includes a pathway control station, pathway stations, and implemented with a plurality of movable platforms located on a plurality of pathways.

The method and apparatus described in the following are for transmitting and receiving an information signal, thus creating an information network, between an information source and a destination, wherein the destination is not within a signal coverage area of the source, whether or not other communication signals are available to the destination.

One example of a communication methodology provides a signal of interest to at least one movable platform in an area where signal coverage is not available from an information source, to create an information network. The method includes steps of transmitting an information signal containing the information with a transmitter located at the information source, receiving the information signal with a first transmitter/receiver unit located on a movable platform that is within a signal coverage area of the information source, and re-transmitting the information signal with the transmitter/receiver unit to a receiver located on the at least one movable platform.

Another example is a method for providing information from at least one movable platform in an area where a signal network does not exist to a destination. According to this example of the invention, the method includes steps of transmitting an information signal containing the information with a transmitter located on the at least one movable platform, receiving the information signal containing the information with a first transmitter/receiver unit located on a movable platform that is within a signal coverage area of the destination, and re-transmitting the information signal with the first transmitter/receiver unit to a receiver located at the destination.

Another example provides information to and from a destination which is in an area where signal coverage is otherwise not available from an information source. According to this example, the system includes a transmitter, located at the information source, that transmits the information signal, a transmitter/receiver unit located on a movable platform that is within a signal coverage area of the information source, that receives the information signal and re-transmits the information signal, and a receiver, located at the destination, that receives the information signal.

Another example provides information to movable platforms transmitting along a signal pathway. According to this example, the method includes steps of transmitting an information signal containing the information from an information source to a transmitter/receiver unit located on a first movable platform, receiving the information signal with the transmitter/receiver unit, and re-transmitting the information signal to a receiver located on a second movable platform.

In general, the information signal is transmitted with a transmitter located at the information source, received with a first transmitter/receiver unit and re-transmitted with the first transmitter/receiver unit to a receiver located at the destination,
wherein the first transmitter/receiver unit is located on a movable platform. The method may also include steps of receiving and re-transmitting the signal with a plurality of additional transmitter/receiver units between the source and the destination. Any of these transmitter/receiver units may be located on movable platforms. Some of these transmitter/receiver units may be located on fixed platforms.

The method can be used to provide a signal of interest to a passenger associated with a movable platform that is in an area where reception of the signal is not available. In this example, the method includes receiving the signal of interest with the first transmitter/receiver unit coupled to a movable platform that is in an area where reception of the signal is available and re-transmitting the signal to a receiver coupled to the movable platform that is in the area where the signal is not available. The method may also include repeating the steps of receiving and re-transmitting the signal with any number of additional transmitter/receiver units coupled to movable platforms along a signal path that the movable platforms are travelling . Each movable platform may receive the signal of interest and present it to passengers associated with the movable platforms. The movable platforms can be located on pathways and can be travelling in similar or different directions. The movable platforms can be any type of mobile platforms capable of moving on land, in the air, or on or in water. Some specific examples of such movable platforms include, but are not limited to, trains, railcars, boats, aircraft, automobiles, motorcycles, bicycles, skate-boards, wheelchairs, golf-carts, trucks, tractor-trailers, buses, police vehicles, emergency vehicles, fire vehicles, construction vehicles, ships, submarines, hydrofoils, barges and the like.

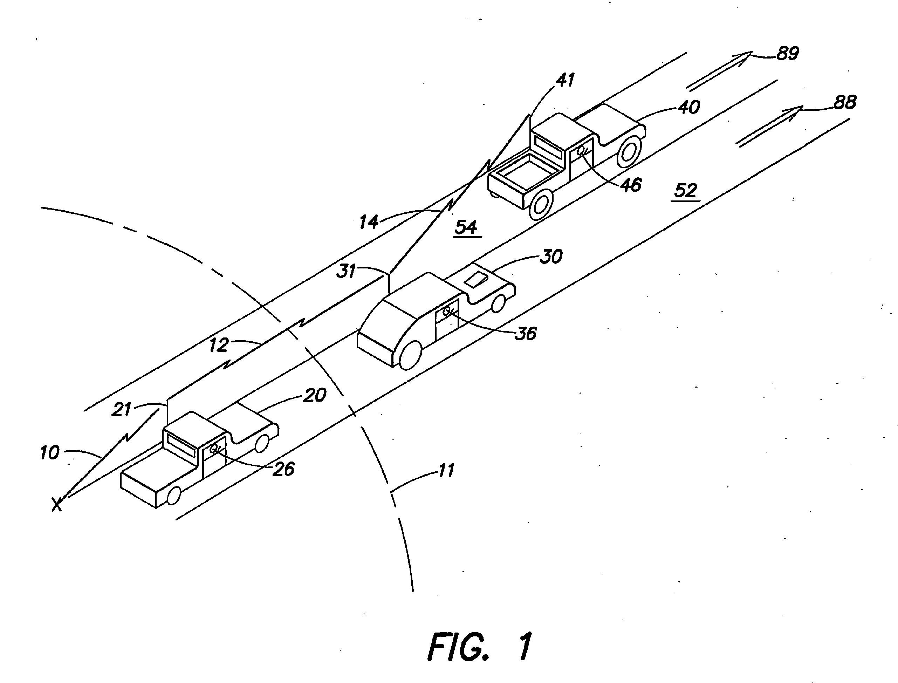

Fig. 1 illustrates an exemplary communication system and methodology according to one embodiment of the invention. A signal of interest 10 is transmitted from an information source and is received by a movable platform 20 located on a pathway 52. Movable platform 20 is equipped with an antenna 21 to receive signals, for possible use by a passenger 26 associated with the movable platform 20, and/or to transmit signals along the pathway 52 and/or along parallel pathway 54. The primary directions of travel for pathways 52 and 54 are depicted by arrows 89 and 99. Movable platform 20 receives the signal 10 and sends a signal 12 to a movable platform 30 located on the same pathway 52. Movable platform 30 is equipped with an antenna 31 to receive signals, for possible use by a passenger 36 associated with the movable platform 30, and/or to transmit signals along the pathway 52 and/or along parallel pathway 54. Movable platform 30 receives signal 12 and sends a signal 14 to a movable platform 40 located on parallel pathway 54. Movable platform 40 is equipped with an antenna 41 to receive signals, for possible use by a passenger 46 associated with movable platform 40, and/or to transmit signals along the pathway 52 and/or along parallel pathway 54. In this embodiment movable platforms 30 and 40 are both out of range of the source of the transmitted signal of interest 10, as depicted by boundary line 11 which indicates the area within which reception of the signal of interest 10 is available. In this example, movable platforms 20, 30, and 40 are located on parallel pathways having the same primary direction of travel. It is to be appreciated that the methodology and system of the invention do not require that every movable platform or any specific movable platform be involved in the communication system and methodology, nor does it require that every movable platform or any specific movable platform need be moving to serve as a receiver and/or transmitter.

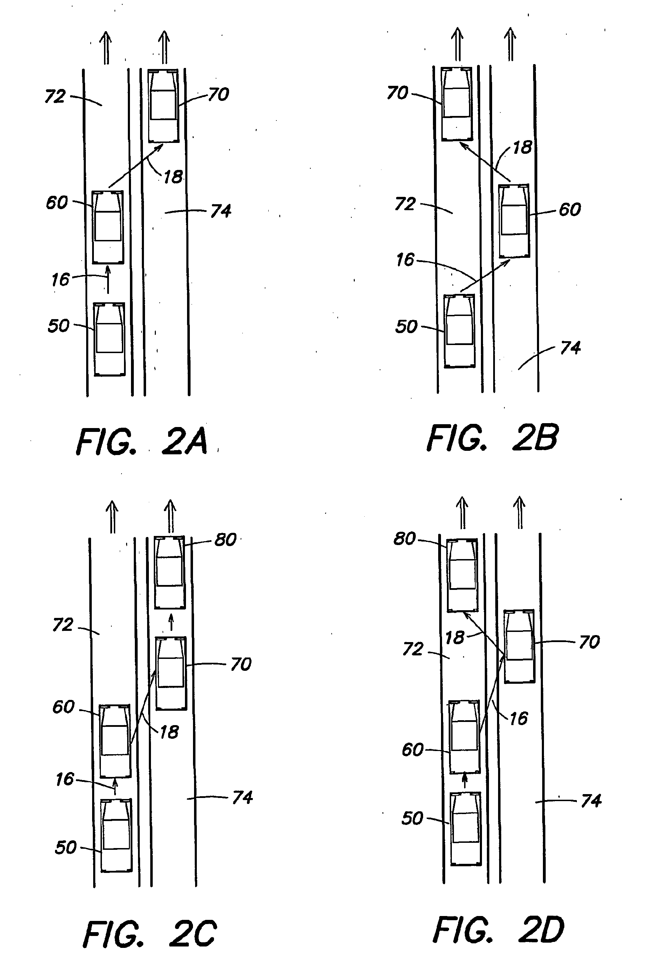

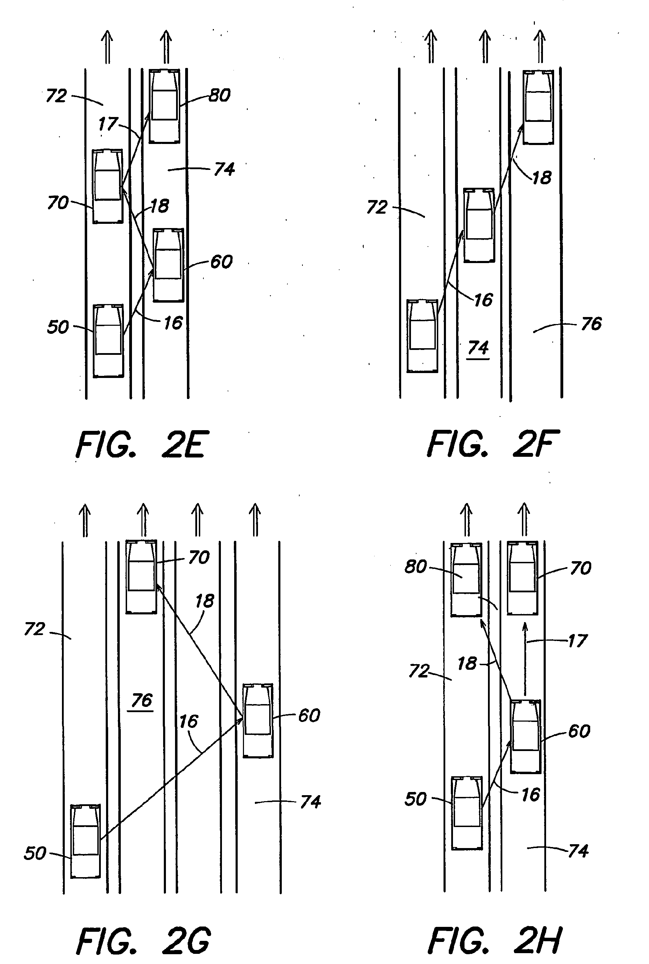

Figures 2A-2H illustrates additional examples of routing of a signal to provide the signal to at least one destination that is not within a signal coverage area of the signal source, for movable platforms positioned on parallel pathways having the same primary direction of travel. Fig. 2A includes a first movable platform 50, positioned on a pathway 72, which is in an area where the signal,of interest is available. This movable platform receives a signal transmission (not shown) with a first transmitter/receiver unit associated with the movable platform, and re-transmits the signal 16 received by the receiver/transmitter unit to a second receiver/transmitter unit associated with a second movable platform 60 positioned along the same pathway. In this example, the second movable platform 60 is not within the area where the original signal of interest is available. The second movable platform 60 may re-transmit the signal of interest 18 to a third movable platform 70 that is also not within the coverage area of the original signal of interest, and which is positioned along a parallel pathway 74 having the same primary direction of travel. The method may further include steps of receiving and re-transmitting the signal to and from any number of additional movable platforms positioned along the pathways.

Figures 2B-2H illustrate additional signal routing possibilities with the method and system of the invention. The signal routing can occur, for example, as a transmitted signal 16 from first movable platform 50 on pathway 72, to movable platform 60 on a contiguous pathway or on the same pathway, and as a transmitted signal 18 from movable platform 60 to additional movable platform 70 on the same or parallel pathways as depicted in any of Figures 2A through 2F. The signal routing can also occur, for example, from movable platform 50 on a pathway 72 to a movable platform 60 on a non-contiguous, yet parallel pathway, as depicted in Fig. 2G. The signal routing can also occur, for example, from a movable platform on a first pathway to a movable platform on a second pathway, to another movable platform on the first pathway, as depicted in Figures 2B, 2D, and 2E. According to the method and system of the invention, it is to be appreciated that any movable platform 60 can re-transmit a received signal via a plurality of re-transmitted signals 17, 18 to a plurality of movable platforms 70, 80 located along the same 72 or parallel 74 pathways, as shown in Fig. 2H. Figures 2A through 2H thus illustrate several examples of communication transmission paths for movable platforms travelling in the same direction along parallel pathways. It is to be appreciated, however, that the methodology and system of the invention do not require that every movable platform or any specific movable platform be involved in the communication system, nor does it require that every movable platform or any specific movable platform be moving to still serve as a receiver or re-transmitter.

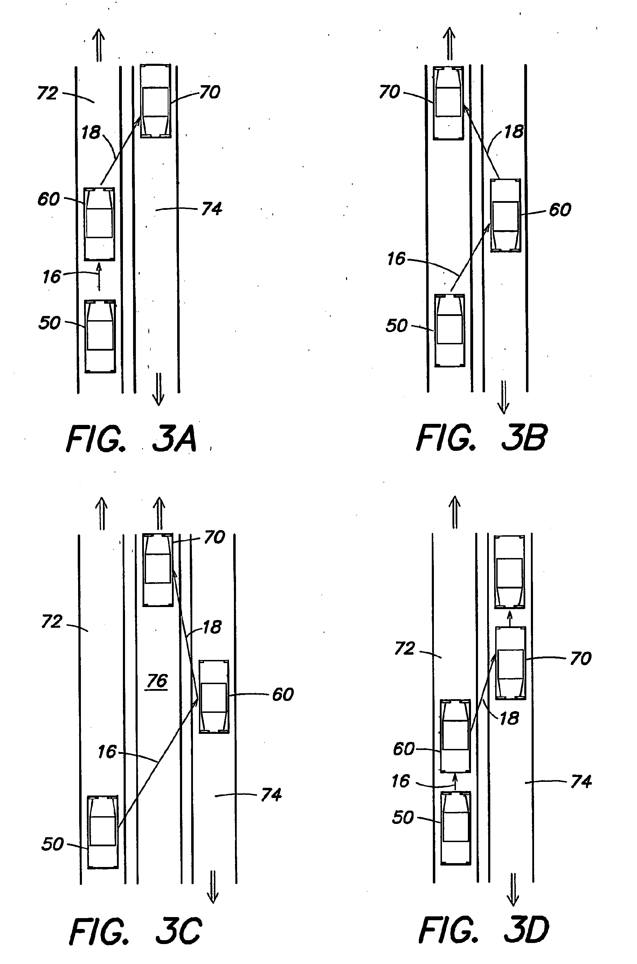

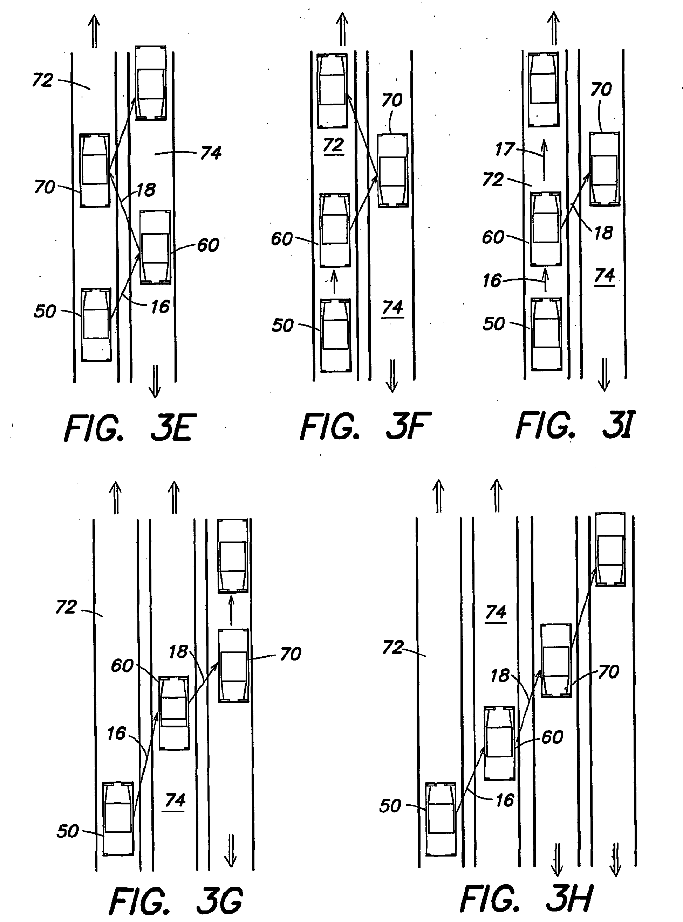

Figures 3A-3I illustrate additional examples of routing a signal to provide the signal to at least one destination that is not in a signal coverage area of the source, for movable platforms on parallel pathways having opposite primary directions of travel. Fig. 3A depicts a first movable platform 50 receiving a signal of interest (not shown) with a first transmitter/receiver unit, for possible use by passengers associated with the movable platform, while positioned along a pathway 72 and in an area where the signal of interest is available, and re-transmitting the signal of interest 16, received by the first transmitter/receiver unit, to a second transmitter/receiver unit located on a second movable platform 60 positioned along the same pathway 72 and in an area where the original signal of interest is not available. The second movable platform 60 may re-transmit the signal of interest 18 to a third movable platform 70, also within an area where the original signal of interest is not available, positioned on a pathway 74 having an opposite primary direction of travel. This communication system and methodology may be used to provide a signal of interest to a multiplicity of movable platforms positioned along any number of pathways. The signal routing can occur, for example, from a movable platform 50 on one pathway to a movable platform 60 on another contiguous pathway having an opposite primary direction of travel, as depicted in Figures 3A 3B, 3D, 3E, 3F, 3G, 3H, and 3I. The signal routing can also occur, for example, from a movable platform on one pathway to a movable platform on another non-contiguous, yet parallel pathway, as depicted in Fig. 3C. The signal routing can also occur, for example, from a first movable platform 50 on one pathway 72, to a second movable platform 60 on another pathway 74, to a third movable platform 70 on the first pathway, as depicted in Figures 3B, 3E, and 3F. It is to be appreciated that any movable platform may re-transmit a received signal to a plurality of movable platforms along the same or different pathways, as shown in Fig. 3I. Figures 3A through 31 thus illustrate several examples of communication transmission paths for movable platforms travelling in opposite directions along parallel pathways. It is to be appreciated, however, that the methodology and system of the invention do not require that every movable platform or any specific movable platform be involved in the communication system, nor does it require that every movable platform or any specific movable platform be moving to still serve as a receiver and/or re-transmitter.

Although the movable platforms depicted in Figures 1 through 3 are illustrated as automobiles, it is to be appreciated that any movable platforms that are apart of the system of the invention may be any type of movable platform, and that the communication method and system of the present invention is not limited to automobiles. Some examples of movable platforms may include, but are not limited to, any of the movable platform types described above.

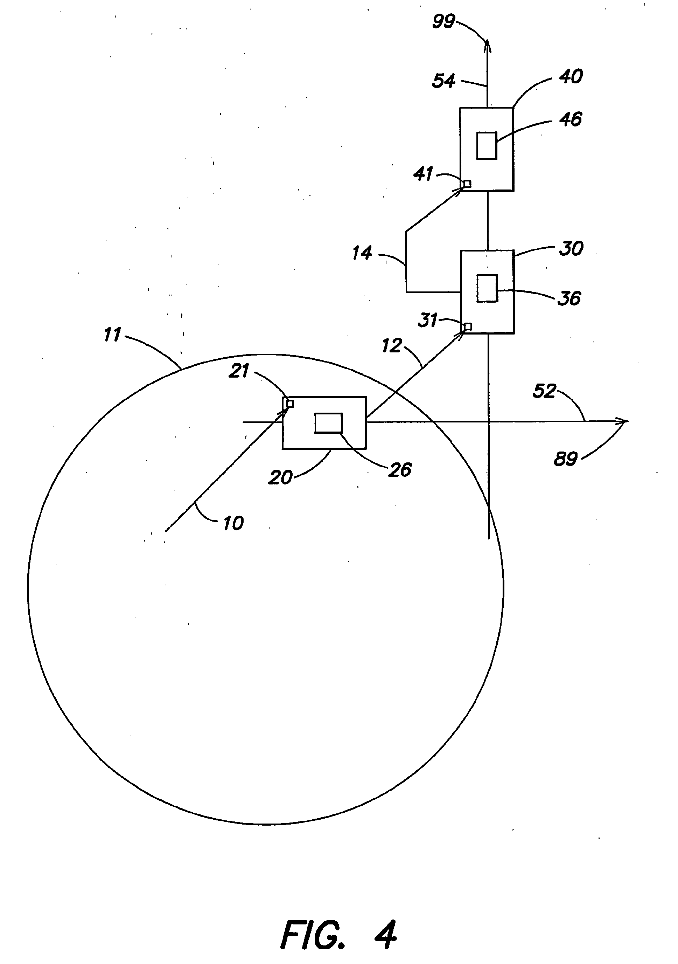

Figure 4 is a functional diagram that illustrates an additional embodiment of the methodology and system of the invention for movable platforms 30 and 40 on a pathway 54 having a primary direction of travel 99 that is perpendicular to a primary direction of travel 89 of pathway 52. Figure 4 includes a first movable platform 20 receiving a signal of interest 10 with a first transmitter/receiver unit 21 associated with the first movable platform, for possible use by passenger 26 on the first movable platform 20, while positioned along the pathway 52 and in an area 11 where the signal 10 is available. The first movable platform 20 re-transmits the signal of interest 12, received by the first transmitter/receiver unit 21, to a second transmitter/receiver unit 31 associated with second movable platform 30 that is positioned along the perpendicular pathway 54 having primary direction of travel 99, and that is not within area 11 where the original signal 10 is available. The second movable platform may also re-transmit the signal of interest 14 to a third transmitter/receiver unit 41 associated with third movable platform 40, for possible use by a passenger 46 that may be on moving platform 40, and that is also not within area 11 where the original signal 10 is available, and which is positioned along the same perpendicular pathway 54. It is to be appreciated that the method and communication network of the invention may provide the signal of interest to any of a multiplicity of movable platforms along parallel and/or perpendicular pathways, for possible use by passengers associated with these movable platforms.

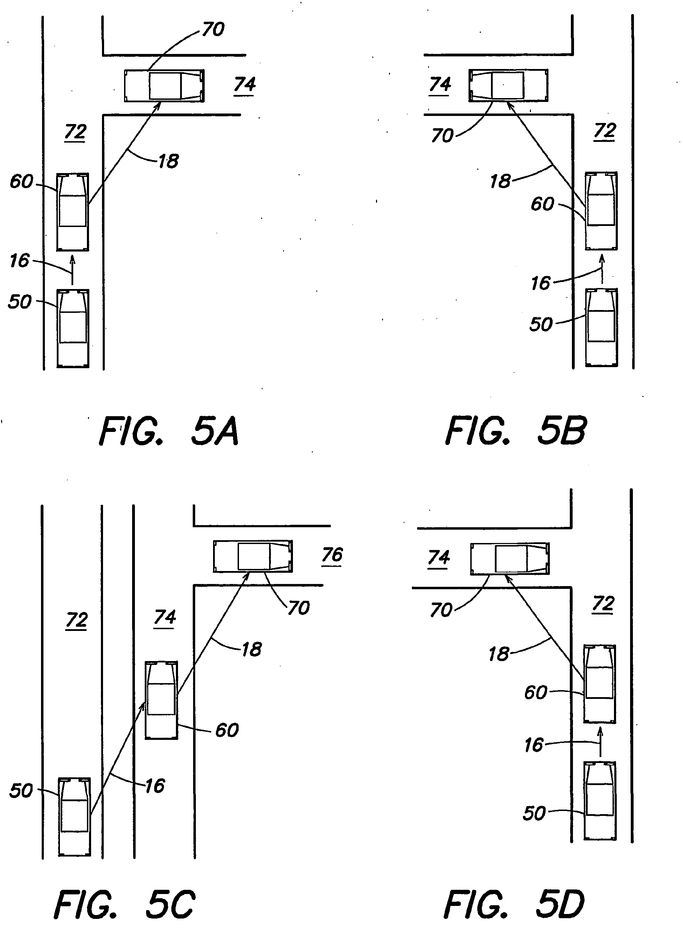

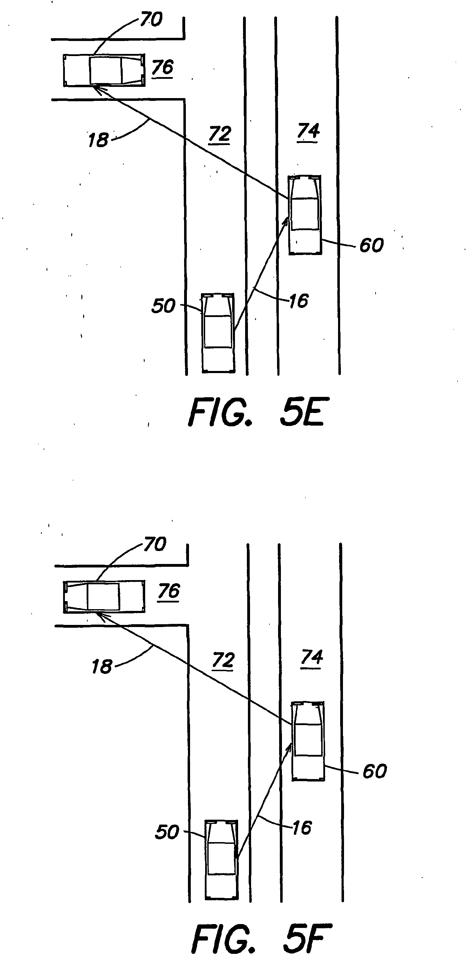

Figures 5A-5F illustrate several examples of routing a signal to provide the signal to at least one destination that is not within a signal coverage area of an information source, that can be implemented according to the method and system of the invention for movable platforms positioned on perpendicular pathways. The signal routing can occur, for example, from a first movable platform 50 on a pathway 72 to a second movable platform 60 on the same pathway, to a third movable platform 70 on a perpendicular pathway 74, as depicted in Figures 5A, 5B, and 5D. The signal routing can occur, for example, from a movable platform 50 on one pathway 72 to a movable platform 60 on a parallel pathway 74, to a movable platform 70 on a perpendicular pathway 76, as depicted in Figures 5C, 5E, and 5F. It is to be appreciated that any movable platform may re-transmit the signal to a plurality of movable platforms on the same or on perpendicular pathways, as depicted in Figures 5G, and 5H. Figures 5A through 5H thus illustrate several examples of communication transmission paths for movable platforms travelling in various directions along parallel and perpendicular pathways. It is to be appreciated, however, that the method and system of the invention do not require that every movable platform or any specific movable platform be involved in the communication system, nor does it require that every movable platform or any specific movable platform be moving to serve as a receiver or re-transmitter.

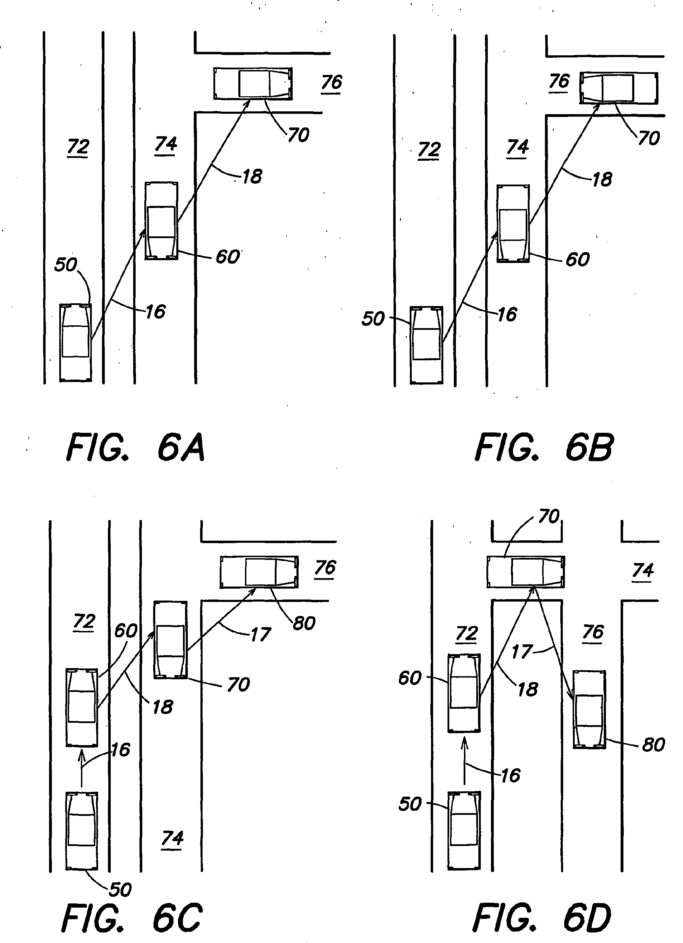

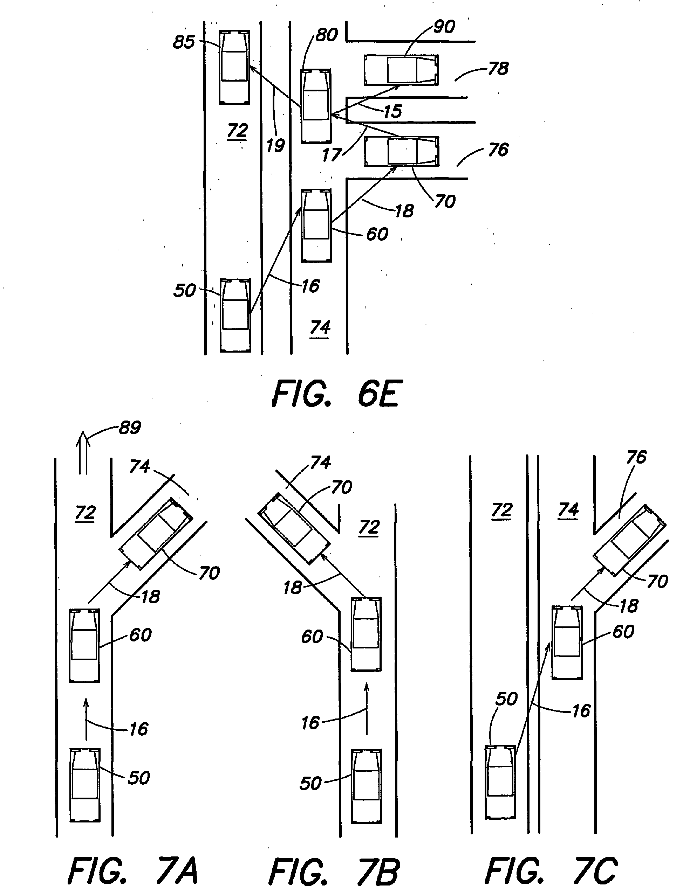

Figures 6A-6E illustrate additional examples of signal routing that can be provided with the communication method and network of the present invention for movable platforms on perpendicular and/or parallel pathways. Fig. 6A includes a first movable platform 50 receiving a signal of interest transmission (not shown) with a first transmitter/receiver unit associated with the first movable platform, while located on a first pathway 72 in an area where the signal of interest is available, and re-transmitting the signal of interest 16, received with the first transmitter/receiver unit to a second transmitter/receiver unit associated with a second movable platform 60 positioned on a parallel pathway 74 and in an area where the original signal of interest is not available. The second movable platform 60 may also re-transmit the signal of interest 18 to a third movable platform 70 that is not within the area where the original communication signal is available, and which is positioned along a perpendicular pathway 76. With the method and communication network of the invention, the signal of interest can be provided to any number of a plurality of movable platforms positioned along parallel or perpendicular pathways, for possible use by passengers associated with the movable platforms. The signal routing can occur, for example, from a movable platform 50 on one pathway 72 to a movable platform 60 on a parallel pathway 74, to a movable platform 70 on a perpendicular pathway 76, as depicted in Figures 6A, 6B, and 6C. It is to be appreciated that the primary directions of travel of the first and second parallel pathways may be the same or opposite, and that the movable platforms on the perpendicular pathways may be approaching, or receding from, an intersection of one of the first, second or third pathways. The signal routing can also occur, for example, from a movable platform 50 on one pathway 72, to movable platforms 60, 70, 80, 85 and 90 on pathways 74, 76 and 78, and the first pathway 72, as depicted in Fig. 6E. It is to be appreciated that any of the movable platforms, such as movable platform 80, may re-transmit the signal 17 to a plurality of movable platforms 85, 90 on any of the pathways, as depicted in Fig. 6E. Figures 6A through 6E thus illustrate several examples of communication transmission paths for movable platforms travelling in similar or opposite directions along parallel pathways and/or along perpendicular pathways. It is to be appreciated, however, that the method and system of the invention do not require that every movable platform or any specific movable platform be involved in the communication system, nor does it require that every movable platform or any specific movable platform be moving to serve as a receiver or re-transmitter.

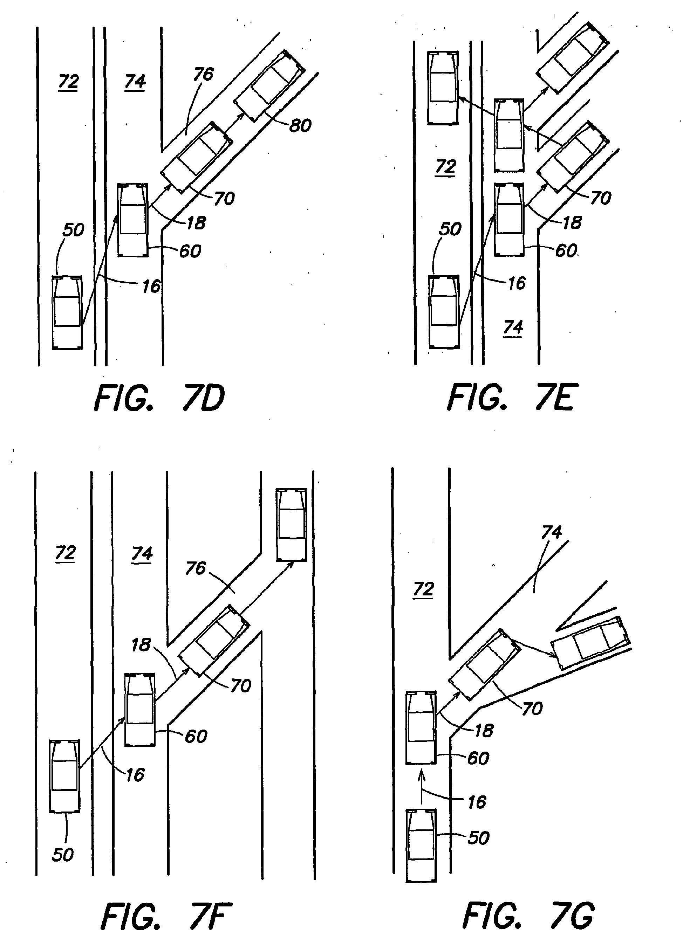

Figures 7A-7G illustrate several additional examples of signal routing that can be provided with the communication network and methodology of the invention for movable platforms on pathways skewed with respect to other pathways. Fig. 7A includes a first movable platform 50 receiving a signal of interest transmission (not shown) with a first transmitter/receiver unit associated with the first movable platform, while positioned on a first pathway 72 in an area where the signal of interest is available, and re-transmitting the signal of interest 16, received with the first transmitter/receiver unit, to a second transmitter/receiver unit associated with a second movable platform 60 that is positioned along the same pathway in an area where the original signal of interest is not available. The second movable platform 60 may also re-transmit the signal of interest 18 to a third movable platform 70 positioned along a pathway 74 that is skewed with respect to the first pathway and its primary direction of travel 89. With the communication method and network of the invention, the signal of interest can be provided to a multiplicity of movable platforms positioned along parallel and skewed pathways, for possible use by passengers associated with the movable platforms. The routing can occur, for example, from a movable platform 50 on a first pathway 72, to a movable platform 60 on a second pathway 74 that is skewed with respect to the primary direction of travel 89 of the first pathway 72, as depicted in Figures 7A and 7B. The signal routing can also occur, for example, from a movable platform 50 on a first pathway 72, to a second movable 60 platform on a parallel pathway 74, to movable platforms 70 and 80 on a pathway 76 that is skewed with respect to the second pathway 74, as depicted in Figures 7C and 7D. The signal routing can also occur, for example, from a movable platform on one pathway to movable platforms on a multiplicity of pathways, parallel or skewed with respect to each other, as depicted in Figures 7E, 7F, and 7G.

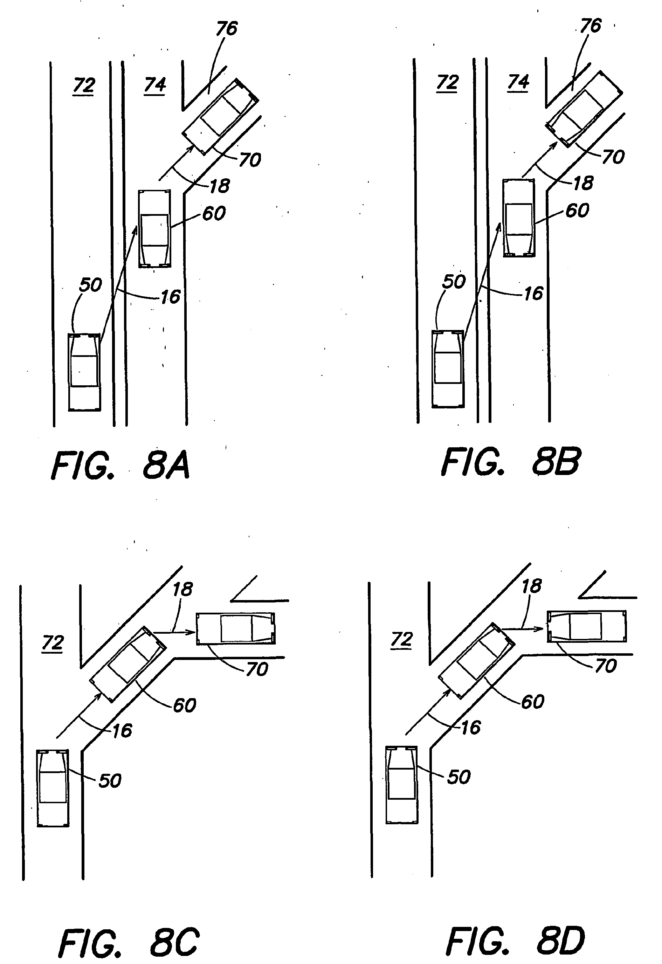

Figures 8A-8D illustrate additional examples of signal routing that can be provided with the communication network and methodology of the invention for movable platforms on parallel or skewed pathways. Figures 7A through 7G and Figures 8A through 8D collectively illustrate several examples of signal routing for movable platforms travelling in similar or opposite directions along parallel and skewed pathways. It is to be appreciated, however, that the method and system of the invention do not require that every movable platform or any specific movable platform be involved in the communication system, nor does it require that every movable platform or any specific movable platform be moving to still serve as a receiver or re-transmitter.

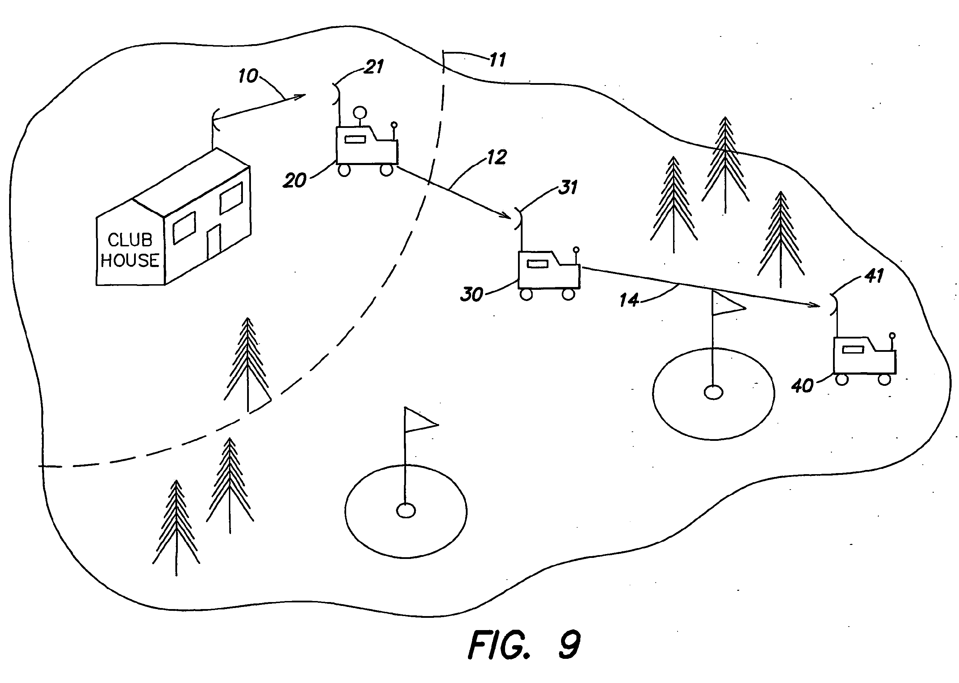

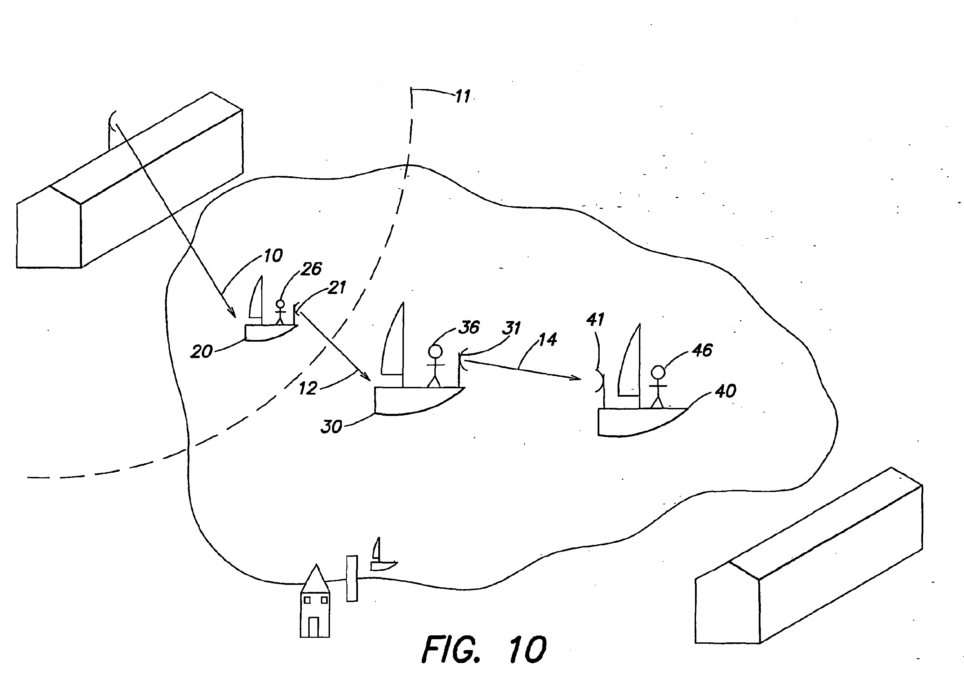

Figures 9 and 10 illustrate examples of the communication system and method according to the invention for movable platforms that need not be located on pathways. As has been discussed herein and using the same reference numbers as used with respect to Fig. 1, a first movable platform 20 located within an area, as indicated by boundary line 11, where a signal of interest is available, receives the signal of interest 10 transmitted from an information source with a first transmitter/receiver unit 21 and re-transmits the signal of interest 12 to a second movable platform 30 that is not located in area 11 where the signal of interest 10 is available. The second movable platform 30 may re-transmit the signal of interest 14, received with transmitter/receiver unit 31, to a third transmitter/receiver unit associated with a third movable platform 40 that is also within an area where the signal of interest 10 is not available. It is therefore to be appreciated that with the communication method and network of the invention, any number of movable platforms located in an area where the signal of interest 10 may not be available, may still receive the signal of interest and provide it to passengers 26, 36 or 46 that may be associated with the movable platforms. It is also to be appreciated that the method and system of the invention do not require that every movable platform or any specific movable platform be involved in the communication system, nor does it require that every movable platform or any specific movable platform be moving to still serve as a receiver and/or re-transmitter. It is to be further appreciated that the moving platforms need not be located on pathways to still serve as transmitters and/or receivers within the method and system of the invention.

Some of the advantages of the communication methodology and system of the invention include that each signal may be of relatively low power, especially in high traffic density areas where the distance from one movable platform to another is small. Low power signals pose significantly fewer health risks to users than high power signals. In addition, the communication methodology and system of the present invention precludes the need for large and/or numerous base stations or cell towers which are expensive, unsightly and undesirable, especially in high density areas, and impractical to construct in other areas. With the method and system of the invention, the movable platforms to which it is desired to provide the signal of interest also make up the communication network.

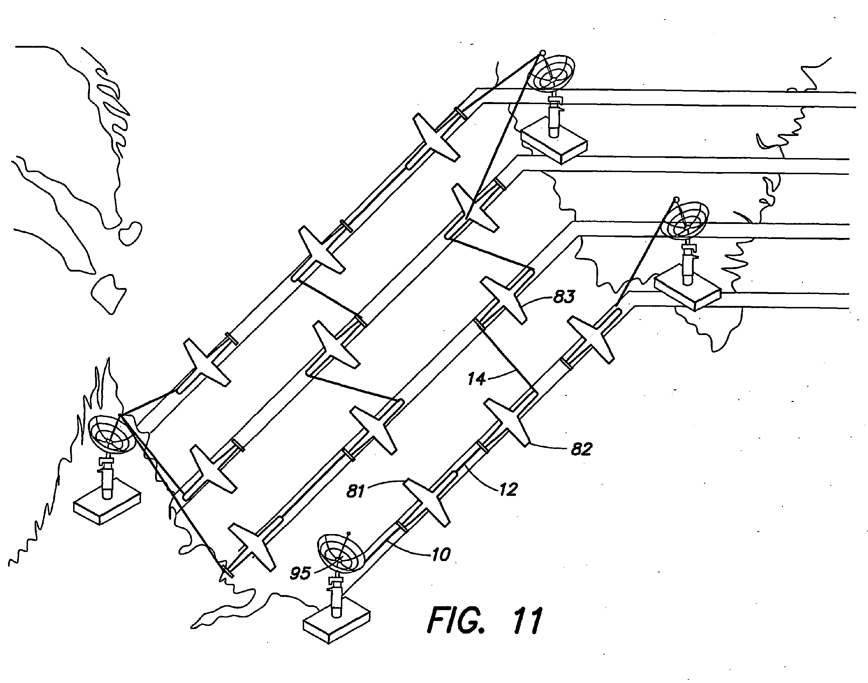

Figure 11 illustrates another example of the method and system of the invention, wherein the movable platforms are passenger aircraft. A first aircraft 81 located within a coverage area of an information source 95, receives a signal of interest 10 from the information source with a first transmitter/receiver unit located on the first aircraft 81, and re-transmits the signal of interest 12, received with the first transmitter/receiver unit, to a second transmitter/receiver unit located on a second aircraft 82, and that is not within the coverage area of the information source 95. The second aircraft 82 may re-transmit the signal of interest 14 to any of a multiplicity of aircraft, such as aircraft 83, also located in an area where the original signal of interest is not available. The plurality of aircraft may be located on flight pathways that are parallel, and that are located over land or water. It is to be appreciated that the communication methodology and network of the invention do not require that every aircraft or any specific aircraft be involved in the communication network, nor does it require that each specific aircraft be positioned at the same altitude. Aircraft, for example, are often located on flight pathways that have additional flight pathways located above and/or below its pathway, thus forming a layered set of pathways. It is also to be appreciated that each aircraft need not be located in a fixed pathway.

Another example of the method and system of the invention may include the use of supplemental communication systems to augment the communication methodology and system of the invention. For example, a satellite communication system, or cellular communication system may be used at times to communicate directly with movable platforms located in areas where there may not be sufficient vehicular traffic to provide a signal to the movable platform. According to this embodiment, when the movable platform enters a region that does contain sufficient other movable platforms that are equipped with transmitter/receiver units to re-transmit the signals to the movable platform, the movable platform may then communicate signals using the vehicular communication methodology and network of the present invention.

An example includes passenger aircraft in pathways above an ocean, which may use, for example, satellites or ships to receive signals of interest that are not available from other movable platforms, and when sufficient other passenger aircraft are available to allow for the communication methodology and network of the invention to be established, the aircraft may then use the communication methodology and network of the invention to communicate signals to other aircraft in the sky or on the ground. It is to be appreciated that the method and system of the invention do not require that every air or sea movable platform or any specific air or sea movable platform be involved in the communication system, nor does it require that every aircraft or any specific aircraft be moving to still serve as a receiver and/or re-transmitter.

An example (not illustrated) of the communication network and methodology of the invention allows movable platforms in the network to share information with other movable platforms in the network, and in the process of doing so, to also provide positional information, and create Situation Awareness within the network. For example, movable platform A in the network may observe an accident in its pathway and transmit an accident report, containing information regarding the location and heading of movable platform A, to movable platforms B and C positioned along this, or a nearby, pathway. Movable platforms B and C may then adjust their headings in order to avoid the accident. Another example of situation awareness information that may be provided by the method and system of the invention may be information regarding weather conditions or traffic congestion. The information, along with positional information of the transmitting movable platform, can be used by other movable platforms to adjust their headings to avoid particularly bad weather conditions or traffic congestion.

Another embodiment (not illustrated) of the method and system of the invention may provide for numerous signals to be provided amongst the transmitters and receivers of the network, wherein the numerous signals need not be identical or contain the same information. For example, a first signal may contain combined communication signals directed at specific movable platforms. Upon contact with a first intended movable platform, the first signal may be reduced by eliminating the contents intended for the first movable platform and transmitting a second signal to other movable platforms in the network. This methodology may be implemented in any number of movable platforms. An example of an application of this network and method of the invention is a network, or a plurality of networks, for providing communication services to a group of movable platforms which have a common ownership or affiliation. These movable platforms can be positioned along pathways within an area serviced by at least one network and system of the invention. Other movable platforms which are not part of the aforementioned group and which are also positioned within the same area serviced by the same mobile network, could form part of the group's dynamic pathway network, and receive access to unrestricted signals, but be prevented from decoding the signals intended for the group's exclusive use. Techniques such as, for example, spread spectrum processing, may be used to limit the opportunity of unauthorized users to observe and demodulate the signals. Spread spectrum processing also provides other benefits such as reduced power spectral density and enabling the receivers to reject interfering transmissions from other signals. Accordingly, it is to be appreciated that not every movable platform of the method and system of the invention need be an intended recipient of, or have access to, a signal of interest. Some of the movable platforms may simply be used to relay the signal of interest to other movable platforms.

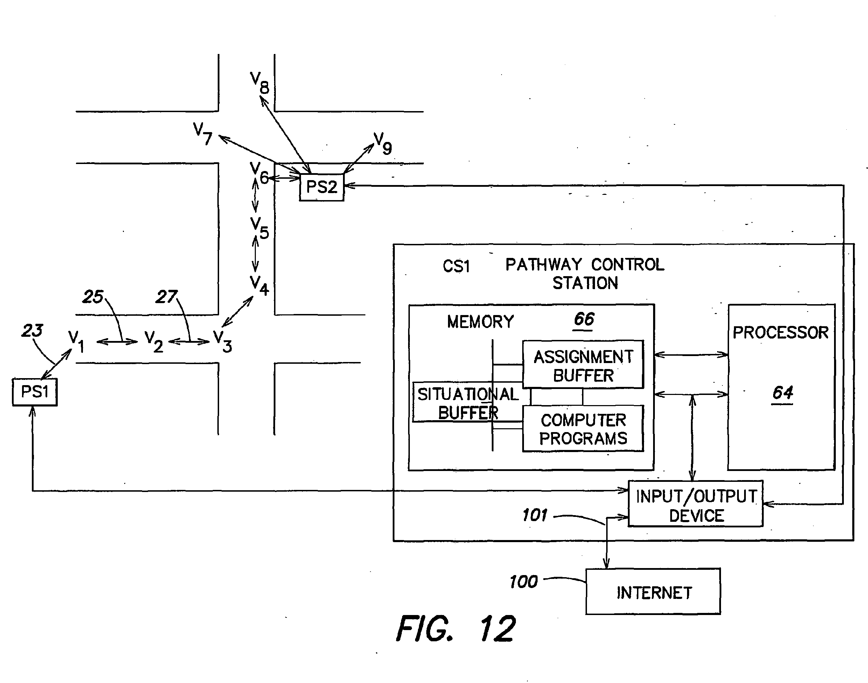

According to another example of the method and system of the invention, a communications network includes one or more pathway stations providing a signal to one or more movable platforms that may be positioned on pathways, and corresponding transmitter/receiver units associated with one or more movable platforms, so as to provide a signal of interest to a plurality of movable platforms in areas where reception of the signal of interest is not otherwise available. Figure 12 illustrates an example of the present invention, and includes pathway stations PS1 and PS2, movable platforms V1-V9, and a pathway control station CS1. It is to be understood that pathway stations PS1, PS2 and CS1 can transmit and/or receive the signals of interest and can be coupled to existing communications networks, such as, for example, the Internet or public telephone networks.

An example of a method of providing the signals of interest to the movable platforms located along the pathways, according to this embodiment of the present invention, includes transmitting a signal of interest 23 from at least one of a plurality of pathway stations, such as PS1, receiving the signal with at least one of a plurality of transmitter/receiver units associated with corresponding movable platforms, such as movable platform V1, in a first area where the signal of interest 23 is available from the pathway station PS1, and re-transmitting the received signal of interest 25 to at least one of a second set of receivers associated with a plurality of movable platforms, such as movable platform V2, positioned on pathways and not in the first area where the original signal of interest 22 is available. The method may include additional steps of receiving and re-transmitting the signal of interest 27 to any movable platform V3-V6 that is positioned on a pathway and which is not located in the first area where the original signal is available, so that each appropriately equipped movable platform can receive and re-transmit the signal of interest to other equipped movable platforms. According to this method, each pathway station PS1 may monitor the communications along local pathways and may be able to relay a signal to one or more additional pathway stations PS2 through the communication network. In addition, it is to be appreciated that pathway control station CS1, coupled to the pathways stations PS1 and PS2, can also be used to provide signal 101 from a public network 100, such as the Internet, to any movable platform that is positioned on a pathway and which is not in an area where reception of the original signal is otherwise available, so that a communication network is provided wherein each movable platform in the network can receive signals of interest and provides the signal to passengers that may be associated with the movable platforms. According to this embodiment of the invention, one of the functions of the pathway control station CS1 is as an interface between one or more of the movable platforms and other communication networks 100, these other communication networks including, for example, the Internet, public telephone networks, a satellite network, a cable network or any other wired or wireless communication network.

It is to be appreciated that the pathway stations may also receive signals from one or more of the transmitter/receiver units, may participate in the re-transmission of signals, and may assist in routing of signals to and amongst movable platforms. Each pathway station may also monitor signal and movable platform activity along local pathways. The pathway station may also, for example, track equipped movable platforms which are positioned along pathways and the signal communications via a two-way tracking channel and system. The pathway station and the network of the present invention can be used to monitor the quantity of movable platforms and the position and velocity of movable platforms positioned in the communication network. The pathway stations may also monitor signal communications and issue warning of impending movable platform or signal traffic problems. The pathway stations may utilize systems such as the global positioning system (GPS) to assist in this monitoring of movable platforms and signals.

Another example of the present invention includes routing software executed for example by processor 64 in control station CS1, as illustrated in Fig. 12, for determining optimum use of the pathway stations and movable platforms available within the network, and storage media, such as random access memory, for saving data should a movable platform become disconnected from the network until the movable platform is reconnected to the network. To minimize the probability of a movable platform being disconnected from the network, the pathway stations and pathway control station may continuously decide how best to route signals to interconnect the movable platforms as they navigate the pathways from one region to another region. For example, as movable platforms enter a pathway the movable platform can, through its antenna and transmitter/receiver unit, locate and acquire and communicate signals to a pathway station. In addition, either through the use of multiple antennas or a multibeam antenna, a pathway station may simultaneously track and communicate signals with at least one movable platform on its pathway, and monitor the pathway to acquire new movable platforms entering the pathway.

While one pathway station per pathway is illustrated in Figure 12, it is to be appreciated that a degree of pathway station redundancy can be employed in the network of the invention. For example, several pathway stations may be deployed along one pathway, each using mechanisms known to those of skill in the art, such as different frequencies or polarization techniques, to prevent destructive interference between the pathway stations. When a pathway station becomes overloaded, or it is determined that a pathway station is likely to become overloaded, from excessive communications with one or more movable platforms in the network, a redundantly deployed pathway station may assume control of one or more of the movable platforms to prevent overloading of the first pathway station. The control station CS1 may also perform a continual monitoring process to detect impending overloading or failure of pathway stations in order to manage the movable platform network, and maintain quality of the network.

It is further to be appreciated that the network and communication methodology of the present invention is not limited to a singular movable platform type and can be provided by mixed movable platform types.

It is to be understood that at least some of the movable platforms within the communication network of the invention will have receivers coupled to the movable platforms which receive the communication signals of interest. In addition, any movable platform or pathway station in the network may contain a transmitter/receiver unit, but each movable platform need not contain a transmitter/receiver unit. Further it is to be appreciated that any vehicle or pathway station may be the source or the destination of the original signal.

It is to be understood that according to the invention, the pathways referred to in the above description of embodiments of the invention are, for example, any of the roadways, waterways or airways maintained for use by any of the movable platforms described above. Nevertheless, it is to be appreciated that the method and network of the invention are not limited to movable platforms located on pathways, and include movable platforms that are not confined to pathways. It is also to be appreciated that the communication network and method of the invention may be used even though vehicle usage and density on any particular pathway may not be sufficient to form a continuous network. For example, the signal routing of the invention may provide for signal routing in various directions from pathway to pathway as necessary to transmit the signals to a desired movable platform or pathway station. At times simple direct routing may be used between the information source, the movable platforms and the destinations, at other times more circuitous routing may be necessary. Furthermore, it is to be appreciated that satellite transmission may be used to compliment the network and method of the invention.

It is to be appreciated that the method, system and network of the invention can be implemented using either directional antennas or omni-directional antennas, coupled to the transmitters, receivers and transmitter/receiver units, to provide transmission and reception of the signals of interest among the plurality of movable platforms and pathway stations making up the network and system on the invention. The movable platforms may be equipped with a plurality of antennas, such as two antennas, one for receiving signals and the other for transmitting signals. For example, a movable platform may receive a signal at one frequency with a first antenna and may transmit a signal at another frequency using a second antenna. This example may also include a movable platform having a plurality of antennas that simultaneously receive signals and a plurality of antennas that simultaneously re-transmit the signals, such as directional antennas aligned in several directions. Alternatively the movable platform may be equipped with a single multibeam antenna that is capable of transmitting and/or receiving a plurality of signals simultaneously. It is to be appreciated that with the method and communication method and network of the invention, any antenna may thus operate at any frequency and multiple antennas, or individual beams of multibeam antennas may operate at the same or different frequencies. It is also to be appreciated that different antenna polarizations may be used to prevent unwanted destructive interference between antennas or beams having the same operating frequency.

It is to be appreciated that the communication methodology and network of the invention can be used to form networks that support various well known network modes, such as Asynchronous Transfer Mode (ATM) and Internet protocol (IP). The method and system of the invention may also support the use of various digital encoding techniques, such as, for example, time division multiple access (TDMA) or code division multiple access (CDMA), to enhance the overall efficiency and use of the frequency spectrum of the communication network of the invention. These and other encoding techniques may be used to provide multiple channel access to movable platforms. Error correcting coding and efficient data modulation types may also be used to ensure data quality on the network.

It is to be appreciated that other embodiments of the network and method of the invention may also include the formation of parallel and redundant signal routes to enable transmission of data redundantly along multiple paths to prevent data loss, to avoid low grade routes and to prevent congestion along certain pathways in the network.

It is to be appreciated that any embodiment of the invention may use, for example, infrared signals, laser beams, microwave signals, radio signals or optical signals, for the transmission of the information signals of interest to and from movable platforms, sources, destinations, and other transmitter/receiver units of the network. An advantage of using the infrared spectrum, for example, is that there are no eye-safety concerns when the beams are viewed directly by persons.

## Claims

1. A vehicular communication network for providing information to and from passenger vehicles, the vehicular communication network comprising:
a plurality of passenger vehicles, including at least first, second and third passenger vehicles (20,30,40), located on vehicular pathways (52) and being adapted to transmit and receive signals to and from one another;
a first transmitter/receiver unit (21) located on the first passenger vehicle (20), the first transmitter/receiver unit being adapted to transmit an information signal containing the information;
a second transmitter/receiver unit (31) located on the second passenger vehicle (30), the second transmitter/receiver unit being adapted to receive the information signal from the first transmitter/receiver unit and to re-transmit at least a portion of the information signal; and
a third transmitter/receiver unit (41) located on the third passenger vehicle (40), the third transmitter/receiver unit being adapted to receive at least the portion of the information signal from the second transmitter/receiver unit;
wherein the information signal includes a first portion of information intended for the second passenger vehicle (30) and a second portion of information; and
wherein the information signal re-transmitted by the second transmitter/receiver unit does not include the first portion of information.

2. The vehicular communication network as claimed in claim 1, further comprising a pathway station (PSI) adapted to monitor the plurality of passenger vehicles and signals along the vehicular pathways.

3. The vehicular communication network as claimed in claim 2, wherein the pathway station (PSI) is adapted to monitor a position and a velocity of the plurality of passenger vehicles along the vehicular pathways.

4. The vehicular communication network as claimed in claim 2, wherein the pathway station is adapted to transmit signals to the plurality of passenger vehicles and to receive signals from the plurality of passenger vehicles.

5. The vehicular communication network as claimed in claim 2, further comprising a pathway control station (CSI), coupled to the pathway station (PSI) and to an existing communications network, the pathway control station (CSI) being adapted to control communication between the pathway station (PSI) and the existing communication network.

6. The vehicular communication network as claimed in claim 5, wherein the pathway control station, the pathway station and the passenger vehicles form an information network, and wherein the pathway control station includes a storage medium to store data relating to one of the passenger vehicles when the one passenger vehicle becomes disconnected from the information network so that the information can be provided when the one passenger vehicle is reconnected to the information network.

7. The vehicular communication network as claimed in claim 2, further comprising an additional pathway station (PS2) that assumes control of at least some of the plurality of passenger vehicles to prevent overloading of the pathway station (PSI).

8. The vehicular communication network as claimed in claim 1, wherein the information signal is digitally encoded with the information.

9. The vehicular communication network as claimed in claim 1, wherein the information includes weather information.

10. The vehicular communication network as claimed in claim 1, wherein the information includes traffic information.

11. The vehicular communication network as claimed in claim 1, wherein the information includes information regarding at least one of a heading and a position of at least one of the passenger vehicles.

12. The vehicular communication network as claimed in claim 1, wherein the second portion of information is intended for another of the plurality of passenger vehicles.

13. The vehicular communication network as claimed in claim 1, further comprising a supplemental communication network that communicates directly with the third passenger vehicle when the third passenger vehicle is located in an area where there are insufficient other passenger vehicles available to provide the information signal to the third passenger vehicle.

14. The vehicular communication network as claimed in claim 1, wherein the first passenger vehicle is located on a first vehicular pathway and in an area where there is another, already existing communication channel.

15. The vehicular communication network as claimed in claim 1, wherein the first transmitter/receiver unit is adapted to transmit the information signal at a first frequency, and wherein the second transmitter/receiver unit is adapted to re-transmit the information signal at a second frequency.

16. The vehicular communication network as claimed in claim 1, wherein at least one of the plurality of passenger vehicles is configured to allow a passenger to alter direction of travel of the passenger vehicle in response to the information.

17. The vehicular communication network as claimed in claim 1, wherein the second passenger vehicle and the third passenger vehicle each includes an interface adapted to receive the information in the information signal and to provide at least some of the information for access by a passenger associated with second passenger vehicle and the third passenger vehicle, respectively.

18. The vehicular communication network as claimed in claim 1, wherein at least one of the plurality of passenger vehicles includes an interface adapted to provide the information in the information signal for access by a passenger associated with the passenger vehicle.

19. The vehicular communication network as claimed in claim 1, wherein the passenger vehicles are marine vehicles.

20. The vehicular communication network as claimed in claim 1, wherein the passenger vehicles are ground vehicles.

21. The vehicular communication network as claimed in claim 1, wherein:
the first passenger vehicle is located on a first vehicular pathway; and
the first transmitter/receiver unit comprises a directional multibeam antenna that re-transmits the information signal in a plurality of directions, at least one of the plurality of directions being along the first vehicular pathway.

22. The vehicular communication network as claimed in claim 21, wherein the second passenger vehicle is located on the first vehicular pathway, and wherein the second transmitter/receiver unit comprises a directional antenna that receives the information signal transmitted along the first vehicular pathway by the first transmitter/receiver unit.

23. The vehicular communication network as claimed in claim 21, wherein the multibeam antenna is adapted to transmit the information signal in a first direction at a first frequency and to transmit the information signal in a second direction at a second frequency.

24. The vehicular communication network as claimed in claim 1, wherein at least one of the first and second transmitter/receiver units includes a directional antenna that transmits the information signal along a vehicular pathway on which respective passenger vehicle is located.

25. The vehicular communication network as claimed in claim 1, wherein at least two of the plurality of passenger vehicles are traveling in the same direction along the vehicular pathways.

26. The vehicular communication network as claimed in claim 1, wherein at least two of the plurality of passenger vehicles are traveling in opposite directions along vehicular pathways.

27. The vehicular communication network as claimed in claim 1, wherein at least two of the plurality of passenger vehicles are located on parallel vehicular pathways.

28. The vehicular communication network as claimed in claim 1, wherein the first passenger vehicle is located on a first vehicular pathway and the second passenger vehicle is located on a second vehicular pathway that intersects the first vehicular pathway.

29. The vehicular communication network as claimed in claim 1, wherein the passenger vehicles are aircraft.

30. The vehicular communication network as claimed in claim 29, wherein the first passenger vehicle is located on a first vehicular pathway and the second passenger vehicle is located in a second vehicular pathway that is disposed above the first vehicular pathway.

31. The vehicular communication network as claimed in claim 29, wherein the first passenger vehicle is located on a first vehicular pathway and the second passenger vehicle is located in a second vehicular pathway that is disposed below the first vehicular pathway.

32. The vehicular communication network as claimed in claim 1, wherein the first passenger vehicle is an aircraft and the second passenger vehicle is a ground vehicle.

33. The vehicular communication network as claimed in claim 32, wherein the first transmitter/receiver unit includes an omni-directional antenna that re-transmits the information signal to the second transmitter/receiver unit.

34. The vehicular communication network as claimed in claim 1, wherein the first transmitter/receiver unit comprises an omni-directional antenna that transmits the information signal in all directions, and wherein the second and third transmitter/receiver units each comprise a directional antenna, such that at least the portion of the information signal re-transmitted to the third transmitter/receiver unit by the second transmitter/receiver unit is transmitted and received via a directional link between the second and third transmitter/receiver units.

35. The vehicular communication network as claimed in claim 34, wherein the second and third passenger vehicles are located on or proximate the same vehicular pathway, and wherein the direction link is along the same vehicular pathway.

36. The vehicular communication network as claimed in claim 1, wherein some of the plurality of passenger vehicles comprise an omnidirectional antenna adapted to transmit at least a portion of the information signal to any passenger vehicles within a communication range of the omnidirectional antenna, and wherein others of the plurality of passenger vehicles comprise directional antennas such that directional communication links are provided between those passenger vehicles.

## Patentansprüche

1. Fahrzeugkommunikationsnetz zum Bereitstellen einer Information zu und von Passagierfahrzeugen, wobei das Fahrzeugkommunikationsnetz umfasst:
eine Mehrzahl von Passagierfahrzeugen, die zumindest erste, zweite und dritte Passagierfahrzeuge (20, 30, 40) einschließen, die auf Fahrzeugpfaden (52) angeordnet sind und ausgelegt sind, Signale zueinander zu senden und voneinander zu empfangen;
eine erste Sender/Empfängereinheit (21), die in dem ersten Passagierfahrzeug (20) angeordnet ist, wobei die erste Sender/Empfängereinheit ausgelegt ist, ein Informationssignal, das die Information enthält, zu senden;
eine zweite Sender/Empfängereinheit (31), die an dem zweiten Passagierfahrzeug (30) angeordnet ist, wobei die zweite Sender/Empfängereinheit ausgelegt ist, das Informationssignal von der ersten Sender/Empfängereinheit zu empfangen und zumindest einen Teil des Informationssignals erneut zu senden; und
eine dritte Sender/Empfängereinheit (41), die an dem dritten Passagierfahrzeug (40) angeordnet ist, wobei die dritte Sender/Empfängereinheit ausgelegt ist, zumindest den Teil des Informationssignals von der zweiten Sender/Empfängereinheit zu empfangen;
wobei das Informationssignal einen ersten Teil einer Information, die für das zweite Passagierfahrzeug (30) vorgesehen ist, und einen zweiten Teil einer Information einschließt; und
wobei das Informationssignal, das von der zweiten Sender/Empfängereinheit erneut gesendet wird, den ersten Teil der Information nicht einschließt.

2. Fahrzeugkommunikationsnetz nach Anspruch 1, weiter umfassend eine Pfadstation (PSI), die ausgelegt ist, die Mehrzahl von Passagierfahrzeugen und Signalen entlang der Fahrzeugpfade zu überwachen.

3. Fahrzeugkommunikationsnetz nach Anspruch 2, wobei die Pfadstation (PSI) ausgelegt ist, eine Position und eine Geschwindigkeit der Mehrzahl von Passagierfahrzeugen entlang der Fahrzeugpfade zu überwachen.

4. Fahrzeugkommunikationsnetz nach Anspruch 2, wobei die Pfadstation ausgelegt ist, Signale zu der Mehrzahl von Passagierfahrzeugen zu senden und Signale von der Mehrzahl von Passagierfahrzeugen zu empfangen.

5. Fahrzeugkommunikationsnetz nach Anspruch 2, weiter umfassend eine Pfadsteuerstation (CSI), die mit der Pfadstation (PSI) und mit einem vorhandenen Kommunikationsnetz gekoppelt ist, wobei die Pfadsteuerstation (CSI) ausgelegt ist, eine Kommunikation zwischen der Pfadstation (PSI) und dem vorhandenen Kommunikationsnetz zu steuern.

6. Fahrzeugkommunikationsnetz nach Anspruch 5, wobei die Pfadsteuerstation, die Pfadstation und die Passagierfahrzeuge ein Informationsnetz bilden, und wobei die Pfadsteuerstation ein Speichermedium einschließt, um Daten, die eines der Passagierfahrzeuge betreffen, wenn das eine Passagierfahrzeug von dem Informationsnetz getrennt wird, zu speichern, so dass die Information bereitgestellt werden kann, wenn das eine Passagierfahrzeug mit dem Informationsnetz wieder verbunden wird.

7. Fahrzeugkommunikationsnetz nach Anspruch 2, weiter umfassend eine zusätzliche Pfadstation (PS2), die eine Steuerung von zumindest manchen der Mehrzahl von Passagierfahrzeugen übernimmt, um ein Überlasten der Pfadstation (PSI) zu verhindern.

8. Fahrzeugkommunikationsnetz nach Anspruch 1, wobei das Informationssignal mit der Information digital codiert ist.

9. Fahrzeugkommunikationsnetz nach Anspruch 1, wobei die Information eine Wetterinformation einschließt.

10. Fahrzeugkommunikationsnetz nach Anspruch 1, wobei die Information eine Verkehrsinformation einschließt.

11. Fahrzeugkommunikationsnetz nach Anspruch 1, wobei die Information eine Information einschließt, die zumindest eine Fahrtrichtung und/oder eine Position von zumindest einem der Passagierfahrzeuge betrifft.

12. Fahrzeugkommunikationsnetz nach Anspruch 1, wobei der zweite Teil der Information für ein weiteres der Mehrzahl von Passagierfahrzeugen vorgesehen ist.

13. Fahrzeugkommunikationsnetz nach Anspruch 1, weiter umfassend ein ergänzendes Kommunikationsnetz, das direkt mit dem dritten Passagierfahrzeug kommuniziert, wenn das dritte Passagierfahrzeug in einem Bereich lokalisiert ist, wo unzureichend andere Passagierfahrzeuge verfügbar sind, um dem dritten Passagierfahrzeug das Informationssignal bereitzustellen.

14. Fahrzeugkommunikationsnetz nach Anspruch 1, wobei das erste Passagierfahrzeug auf einem ersten Fahrzeugpfad und in einem Gebiet lokalisiert ist, wo ein anderer, bereits existierender Kommunikationskanal vorhanden ist.

15. Fahrzeugkommunikationsnetz nach Anspruch 1, wobei die erste Sender/Empfängereinheit ausgelegt ist, das Informationssignal bei einer ersten Frequenz zu senden, und wobei die zweite Sender/Empfängereinheit ausgelegt ist, das Informationssignal bei einer zweiten Frequenz erneut zu senden.

16. Fahrzeugkommunikationsnetz nach Anspruch 1, wobei zumindest eines der Mehrzahl von Passagierfahrzeugen konfiguriert ist, um es zuzulassen, dass ein Passagier eine Reiserichtung des Passagierfahrzeugs im Ansprechen auf die Information zu ändert.

17. Fahrzeugkommunikationsnetz nach Anspruch 1, wobei das zweite Passagierfahrzeug und das dritte Passagierfahrzeug jeweils eine Schnittstelle einschließen, die ausgelegt ist, die Information in dem Informationssignal zu empfangen und zumindest eine bestimmte der Information zum Zugriff durch einen Passagier bereitzustellen, der dem zweiten Passagierfahrzeug bzw. dem dritten Passagierfahrzeug zugeordnet ist.

18. Fahrzeugkommunikationsnetz nach Anspruch 1, wobei zumindest eines der Mehrzahl von Passagierfahrzeugen eine Schnittstelle einschließt, die ausgelegt ist, die Information in dem Informationssignal für einen Zugriff durch einen Passagier, der dem Passagierfahrzeug zugeordnet ist, bereitzustellen.

19. Fahrzeugkommunikationsnetz nach Anspruch 1, wobei die Passagierfahrzeuge Marinefahrzeuge sind.

20. Fahrzeugkommunikationsnetz nach Anspruch 1, wobei die Passagierfahrzeuge Bodenfahrzeuge sind.

21. Fahrzeugkommunikationsnetz nach Anspruch 1, wobei:
das erste Passagierfahrzeug auf einem ersten Fahrzeugpfad lokalisiert ist, und
die erste Sender/Empfängereinheit eine MehrstrahlRichtantenne umfasst, die das Informationssignal in eine Mehrzahl von Richtungen erneut sendet, wobei zumindest eine der Mehrzahl von Richtungen entlang des ersten Fahrzeugpfads ist.

22. Fahrzeugkommunikationsnetz nach Anspruch 21, wobei das zweite Passagierfahrzeug auf dem ersten Fahrzeugpfad lokalisiert ist, und wobei die zweite Sender/Empfängereinheit eine Richtantenne umfasst, die das Informationssignal, das entlang des ersten Fahrzeugpfads durch die erste Sender/Empfängereinheit gesendet wird, empfängt.

23. Fahrzeugkommunikationsnetz nach Anspruch 21, wobei die Mehrstrahlantenne ausgelegt ist, das Informationssignal in einer ersten Richtung bei einer ersten Frequenz zu senden und das Informationssignal in einer zweiten Richtung bei einer zweiten Frequenz zu senden.

24. Fahrzeugkommunikationsnetz nach Anspruch 1, wobei zumindest eine der ersten und zweiten Sender/Empfängereinheiten eine Richtantenne einschließt, die das Informationssignal entlang eines Fahrzeugpfads sendet, auf welchem ein jeweiliges Passagierfahrzeug lokalisiert ist.

25. Fahrzeugkommunikationsnetz nach Anspruch 1, wobei sich zumindest zwei der Mehrzahl von Passagierfahrzeugen in die gleiche Richtung entlang der Fahrzeugpfade fortbewegen.

26. Fahrzeugkommunikationsnetz nach Anspruch 1, wobei sich zumindest zwei der Mehrzahl von Passagierfahrzeugen in entgegengesetzten Richtungen entlang der Fahrzeugpfade bewegen.

27. Fahrzeugkommunikationsnetz nach Anspruch 1, wobei zumindest zwei der Mehrzahl von Passagierfahrzeugen auf parallelen Fahrzeugpfaden lokalisiert sind.

28. Fahrzeugkommunikationsnetz nach Anspruch 1, wobei das erste Passagierfahrzeug auf einem ersten Fahrzeugpfad lokalisiert ist und das zweite Passagierfahrzeug auf einem zweiten Fahrzeugpfad lokalisiert ist, der den ersten Fahrzeugpfad schneidet.

29. Fahrzeugkommunikationsnetz nach Anspruch 1, wobei die Passagierfahrzeuge Flugzeuge sind.

30. Fahrzeugkommunikationsnetz nach Anspruch 29, wobei das erste Passagierfahrzeug auf einem ersten Fahrzeugpfad lokalisiert ist und das zweite Passagierfahrzeug auf einem zweiten Fahrzeugpfad lokalisiert ist, der oberhalb des ersten Fahrzeugpfads angeordnet ist.

31. Fahrzeugkommunikationsnetz nach Anspruch 29, wobei das erste Passagierfahrzeug auf einen ersten Fahrzeugpfad lokalisiert ist und das zweite Passagierfahrzeug auf einem zweiten Fahrzeugpfad lokalisiert ist, der unterhalb des ersten Fahrzeugpfads angeordnet ist.

32. Fahrzeugkommunikationsnetz nach Anspruch 1, wobei das erste Passagierfahrzeug ein Flugzeug ist und das zweite Passagierfahrzeug ein Bodenfahrzeug ist.

33. Fahrzeugkommunikationsnetz nach Anspruch 32, wobei die erste Sender/Empfängereinheit eine omni-direktionale Antenne ist, die das Informationssignal zu der zweiten Sender/Empfängereinheit erneut sendet.

34. Fahrzeugkommunikationsnetz nach Anspruch 1, wobei die erste Sender/Empfängereinheit eine omni-direktionale Antenne umfasst, die die Information in sämtliche Richtungen sendet, und wobei die zweiten und dritten Sender/Empfängereinheiten jeweils eine Richtantenne umfassen, derart, dass zumindest der Teil des Informationssignals, der zu der dritten Sender/Empfängereinheit von der zweiten Sender/Empfängereinheit erneut gesendet wird, über eine direktionale Verbindung zwischen den zweiten und dritten Sender/Empfängereinheiten gesendet und empfangen wird.

35. Fahrzeugkommunikationsnetz nach Anspruch 34, wobei die zweiten und dritten Passagierfahrzeuge auf oder nahe bei dem gleichen Fahrzeugpfad lokalisiert sind und wobei die Richtverbindung entlang des gleichen Fahrzeugpfads ist.

36. Fahrzeugkommunikationsnetz nach Anspruch 1, wobei manche der Mehrzahl von Passagierfahrzeugen eine omni-direktionale Antenne umfassen, die ausgelegt ist, zumindest einen Teil des Informationssignals zu jedweden Passagierfahrzeugen innerhalb eines Kommunikationsbereichs der omni-direktionalen Antenne zu senden, und wobei andere der Mehrzahl von Passagierfahrzeugen Richtantennen umfassen, derart, dass Richtkommunikationsverbindungen zwischen diesen Passagierfahrzeugen bereitgestellt werden.

## Revendications

1. Réseau de communication pour véhicule servant à fournir des informations à des et en provenance de véhicules de transport de passagers, le réseau de communication pour véhicule comprenant :
une pluralité de véhicules de transport de passagers, comprenant au moins un premier, un deuxième et un troisième véhicules (20, 30, 40) de transport de passagers, situés sur des voies (52) de circulation pour véhicules et étant adaptés pour émettre et recevoir des signaux vers et en provenance d'un autre véhicule ;
une première unité émettrice/réceptrice (21) située sur le premier véhicule (20) de transport de passagers, la première unité émettrice/réceptrice étant adaptée pour émettre un signal d'informations contenant les informations ;
une deuxième unité émettrice/réceptrice (31) située sur le deuxième véhicule (30) de transport de passagers, la deuxième unité émettrice/réceptrice étant adaptée pour recevoir le signal d'informations à partir de la première unité émettrice/réceptrice et pour retransmettre au moins une partie du signal d'informations ; et
une troisième unité émettrice/réceptrice (41) située sur le troisième véhicule (40) de transport de passagers, la troisième unité émettrice/réceptrice étant adaptée pour recevoir au moins la partie du signal d'informations en provenance de la deuxième unité émettrice/réceptrice ;
dans lequel le signal d'informations comprend une première partie d'informations destinées au deuxième véhicule (30) de transport de passagers et une deuxième partie d'informations ; et
dans lequel le signal d'informations retransmis par la deuxième unité émettrice/réceptrice ne comprend pas la première partie d'informations.

2. Réseau de communication pour véhicule selon la revendication 1, comprenant en outre une station (PS1) de voie de circulation adaptée pour contrôler la pluralité de véhicules de transport de passagers et les signaux le long des voies de circulation pour véhicules.

3. Réseau de communication pour véhicule selon la revendication 2, dans lequel la station (PS1) de voie de circulation est adaptée pour contrôler une position et une vitesse de la pluralité de véhicules de transport de passagers le long des voies de circulation pour véhicules.

4. Réseau de communication pour véhicule selon la revendication 2, dans lequel la station de voie de circulation est adaptée pour émettre des signaux vers la pluralité de véhicules de transport de passagers et pour recevoir des signaux en provenance de la pluralité de véhicules de transport de passagers.

5. Réseau de communication pour véhicule selon la revendication 2, comprenant en outre une station (CS1) de contrôle de voie de circulation, couplée à la station (PS1) de voie de circulation et à un réseau de communication existant, la station (CS1) de contrôle de voie de circulation étant adaptée pour contrôler les communications entre la station (PS1) de voie de circulation et le réseau de communication existant.

6. Réseau de communication pour véhicule selon la revendication 5, dans lequel la station de contrôle de voie de circulation, la station de voie de circulation et les véhicules de transport de passagers forment un réseau d'informations, et dans lequel la station de contrôle de voie de circulation comprend un support de stockage pour stocker des données relatives à l'un des véhicules de transport de passagers lorsque ce même véhicule de transport de passagers se retrouve déconnecté du réseau d'informations, de sorte que les informations peuvent être fournies lorsque ce même véhicule de transport de passagers est reconnecté au réseau d'informations.

7. Réseau de communication pour véhicule selon la revendication 2, comprenant en outre une station (PS2) de voie de circulation supplémentaire qui assure le contrôle d'au moins une partie de la pluralité de véhicules de transport de passagers afin d'empêcher la surcharge de la station (PS1) de voie de circulation.

8. Réseau de communication pour véhicule selon la revendication 1, dans lequel le signal d'informations est codé de manière numérique avec les informations.

9. Réseau de communication pour véhicule selon la revendication 1, dans lequel les informations comprennent des informations météorologiques.

10. Réseau de communication pour véhicule selon la revendication 1, dans lequel les informations comprennent des informations sur la circulation.

11. Réseau de communication pour véhicule selon la revendication 1, dans lequel les informations comprennent des informations relatives à au moins un parmi un cap et une position d'au moins un des véhicules de transport de passagers.

12. Réseau de communication pour véhicule selon la revendication 1, dans lequel la deuxième partie d'informations est prévue pour un autre véhicule de la pluralité de véhicules de transport de passagers.

13. Réseau de communication pour véhicule selon la revendication 1, comprenant en outre un réseau de communication supplémentaire communiquant directement avec le troisième véhicule de transport de passagers lorsque le troisième véhicule de transport de passagers est situé dans une zone dans laquelle il n'y a pas assez d'autres véhicules de transport de passagers présents pour fournir le signal d'informations au troisième véhicule de transport de passagers.

14. Réseau de communication pour véhicule selon la revendication 1, dans lequel le premier véhicule de transport de passagers est situé sur une première voie de circulation pour véhicules et dans une zone où il y a une autre voie de communication déjà existante.

15. Réseau de communication pour véhicule selon la revendication 1, dans lequel la première unité émettrice/réceptrice est adaptée pour émettre le signal d'informations à une première fréquence, et dans lequel la deuxième unité émettrice/réceptrice est adaptée pour retransmettre le signal d'informations à une deuxième fréquence.

16. Réseau de communication pour véhicule selon la revendication 1, dans lequel au moins un véhicule de la pluralité de véhicules de transport de passagers est configuré pour permettre à un passager de modifier la direction de déplacement du véhicule de transport de passagers en réponse aux informations.

17. Réseau de communication pour véhicule selon la revendication 1, dans lequel le deuxième véhicule de transport de passagers et le troisième véhicule de transport de passagers comprennent chacun une interface adaptée pour recevoir les informations contenues dans le signal d'informations et pour fournir à un passager l'accès à au moins certaines des informations associées au deuxième véhicule de transport de passagers et au troisième véhicule de transport de passagers, respectivement.

18. Réseau de communication pour véhicule selon la revendication 1, dans lequel au moins un véhicule de la pluralité de véhicules de transport de passagers comprend une interface adaptée pour fournir à un passager l'accès aux informations, contenues dans le signal d'informations, associées au véhicule de transport de passagers.

19. Réseau de communication pour véhicule selon la revendication 1, dans lequel les véhicules de transport de passagers sont des véhicules maritimes.

20. Réseau de communication pour véhicule selon la revendication 1, dans lequel les véhicules de transport de passagers sont des véhicules terrestres.

21. Réseau de communication pour véhicule selon la revendication 1, dans lequel :
le premier véhicule de transport de passagers est situé sur une première voie de circulation pour véhicules ; et
la première unité émettrice/réceptrice comprend une antenne directionnelle multifaisceau qui retransmet le signal d'informations dans une pluralité de directions, une direction au moins de la pluralité de directions se trouvant le long de la première voie de circulation pour véhicules.

22. Réseau de communication pour véhicule selon la revendication 21, dans lequel le deuxième véhicule de transport de passagers se situe sur la première voie de circulation pour véhicules, et dans lequel la deuxième unité émettrice/réceptrice comprend une antenne directionnelle qui reçoit le signal d'informations émis le long de la première voie de circulation pour véhicules par la première unité émettrice/réceptrice.

23. Réseau de communication pour véhicule selon la revendication 21, dans lequel l'antenne multifaisceau est adaptée pour transmettre le signal d'informations dans une première direction à une première fréquence et pour transmettre le signal d'informations dans une deuxième direction à une deuxième fréquence.

24. Réseau de communication pour véhicule selon la revendication 1, dans lequel au moins une des première et deuxième unités émettrices/réceptrices comprend une antenne directionnelle qui transmet le signal d'informations le long d'une voie de circulation pour véhicules sur laquelle le véhicule de transport de passagers respectif est situé.

25. Réseau de communication pour véhicule selon la revendication 1, dans lequel au moins deux véhicules de la pluralité de véhicules de transport de passagers circulent dans la même direction le long des voies de circulation pour véhicules.

26. Réseau de communication pour véhicule selon la revendication 1, dans lequel au moins deux véhicules de la pluralité de véhicules de transport de passagers circulent dans des directions opposées le long de voies de circulation pour véhicules.

27. Réseau de communication pour véhicule selon la revendication 1, dans lequel au moins deux véhicules de la pluralité de véhicules de transport de passagers sont situés sur des voies parallèles de circulation pour véhicules.

28. Réseau de communication pour véhicule selon la revendication 1, dans lequel le premier véhicule de transport de passagers est situé sur une première voie de circulation pour véhicules et le deuxième véhicule de transport de passagers est situé sur une deuxième voie de circulation pour véhicules qui croise la première voie de circulation pour véhicules.

29. Réseau de communication pour véhicule selon la revendication 1, dans lequel les véhicules de transport de passagers sont des aéronefs.

30. Réseau de communication pour véhicule selon la revendication 29, dans lequel le premier véhicule de transport de passagers est situé sur une première voie de circulation pour véhicules et le deuxième véhicule de transport de passagers est situé sur une deuxième voie de circulation pour véhicules, disposée au-dessus de la première voie de circulation pour véhicules.

31. Réseau de communication pour véhicule selon la revendication 29, dans lequel le premier véhicule de transport de passagers est situé sur une première voie de circulation pour véhicules et le deuxième véhicule de transport de passagers est situé sur une deuxième voie de circulation pour véhicules, disposée en dessous de la première voie de circulation pour véhicules.

32. Réseau de communication pour véhicule selon la revendication 1, dans lequel le premier véhicule de transport de passagers est un aéronef et le deuxième véhicule de transport de passagers est un véhicule terrestre.

33. Réseau de communication pour véhicule selon la revendication 32, dans lequel la première unité émettrice/réceptrice comprend une antenne omnidirectionnelle qui retransmet le signal d'informations à la deuxième unité émettrice/réceptrice.

34. Réseau de communication pour véhicule selon la revendication 1, dans lequel la première unité émettrice/réceptrice comprend une antenne omnidirectionnelle qui transmet le signal d'informations dans toutes les directions, et dans lequel la deuxième et la troisième unités émettrices/réceptrices comprennent chacune une antenne directionnelle, de telle sorte qu'au moins la partie du signal d'informations retransmise à la troisième unité émettrice/réceptrice par la deuxième unité émettrice/réceptrice est transmise et reçue via une liaison directionnelle entre la deuxième et la troisième unités émettrices/réceptrices.

35. Réseau de communication pour véhicule selon la revendication 34, dans lequel le deuxième et le troisième véhicules de transport de passagers sont situés sur ou à proximité de la même voie de circulation pour véhicules, et dans lequel la liaison directionnelle se trouve le long de la même voie de circulation pour véhicules.

36. Réseau de communication pour véhicule selon la revendication 1, dans lequel certains véhicules de la pluralité de véhicules de transport de passagers comprennent une antenne omnidirectionnelle adaptée pour transmettre au moins une partie du signal d'informations à tout véhicule de transport de passagers dans une plage de communication de l'antenne omnidirectionnelle, et dans lequel d'autres véhicules de la pluralité de véhicules de transport de passagers comprennent des antennes directionnelles de telle sorte que des liaisons de communication directionnelles sont fournies entre ces véhicules de transport de passagers.
